(19) Europäisches Patentamt
European Patent Office
Office européen des brevets

(11) **EP 2 944 465 B1**

(12) **EUROPEAN PATENT SPECIFICATION**

(45) Date of publication and mention
of the grant of the patent:
**02.11.2016  Bulletin 2016/44**

(51) Int Cl.:
***B32B 37/00*** *(2006.01)*     ***B32B 27/32*** *(2006.01)*
***B29C 65/08*** *(2006.01)*     ***B32B 27/08*** *(2006.01)*

(21) Application number: **14167962.1**

(22) Date of filing: **12.05.2014**

(54) **Sealing films**

Abdichtfolien

Films d'étanchéité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2015  Bulletin 2015/47**

(73) Proprietor: **Borealis AG**
**1220 Vienna (AT)**

(72) Inventor: **Aarnio-Winterhof, Minna**
**4203 Altenberg bei Linz (AT)**

(74) Representative: **Campbell, Neil Boyd**
**Dehns**
**St Bride's House**
**10 Salisbury Square**
**London**
**EC4Y 8JD (GB)**

(56) References cited:
**EP-A1- 2 027 999     EP-A1- 2 415 598**
**EP-A1- 2 730 393     WO-A1-2008/074493**

## Description

This invention relates to the sealing of a polyethylene film to a substrate such as a polyolefinic substrate and especially to the use of ultrasonic welding in forming said seal with the substrate. The inventors have found that certain multimodal linear low density polyethylene copolymers, preferably terpolymers, offer excellent ultrasonic sealing properties when compared to polyethylenes conventionally used in heat sealing such as unimodal LLDPE.

## Background

Polyethylene films have been used in packaging for many years. These films are often sealed to a substrate such as another polyethylene film to create a seal through which the contents of a package cannot leak. Commonly, the seal is formed through the application of heat. Heat sealed films are therefore used in all manner of different packaging environments.

Whilst heat sealing dominates the market, an alternative sealing method involves ultrasonic welding or ultrasonic sealing. These terms will be used interchangeably herein. This technique has generally not gained favour in the film packaging field perhaps due to expense of equipment and perhaps due to the tailoring of the equipment that might be needed to seal different polymer films.

Moreover, there is no direction correlation between heat sealing performance and ultrasonic welding performance. A material that is favoured for heat sealing may not be the best for ultrasonic welding. Grades that are both useful for heat sealing and ultrasonic welding are not well known.

Ultrasonic welding is an alternative sealing technology based on high frequency acoustic vibrations. Ultrasonic welding works by generating a very high voltage and converting that into high frequency vibrations by means of a converter (Piëzo elements).

A film surface to be sealed is exposed to the high frequency vibrations and that leads to interfilm and intermolecular friction between the film surface and the substrate to which the film is to be sealed. Heat is generated by friction in the sealing area and the sealing layer of the film and the substrate are sealed together.

Ultrasonic welding has traditionally been used in non polyolefinic environments. It has been used with laminates typically made of paper, aluminium or high-melting polymer films, such as polyethylene terephthalate. Its use in diaper technology is also known.

The use of ultrasonic welding of polyolefin films has been suggested but in few publications. In EP-A-1837162, a complex multilayer film is sealed using ultrasonic welding.

In EP-A-0332341, HDPE baby bottle liners are described which are stretched in the transverse direction and ultrasonically welded at one end. US2007/0215610 also mentions ultrasonic welding as one sealing option in a complex coextruded film for microwave applications.

JP2009012779 discusses films for bottle labels that can be sealed via ultrasonic welding.

A further major benefit of the use of ultrasonic welding relates to a saving in raw material costs. When forming a seal between surfaces using conventional heat sealing, the layers may overlap by as much as 10 mm. Much of this overlap is therefore wasted film. With ultrasonic welding this overlap can be reduced to 6 mm. In the context of 2000 packages per hr, that adds up to a significant reduction in wastage. The process of the invention is therefore ideal for the manufacture of mass produced packaging such as heavy duty shipping bags.

The present inventors sought new films that can withstand the high forces/pressures needed to form an ultrasonic seal. The present inventors also sought films that had good ultrasonic sealing and heat sealing capability. In this regard, the inventors observed that well known heat sealing polymer grades such as Exceed 1018, do not perform well ultrasonically. A grade which performs well under both heat and ultrasound sealing is ideal as cheaper heat sealing can be used where costly ultrasonic sealing is not needed and ultrasonic sealing can be used where packaging integrity is critical. Ultrasonic sealing for example, is critical when packed material contaminates the seal area thus reducing heat seal integrity. Ultrasonic sealing may also be valuable when the packaged material is heat sensitive as the heat of the heat sealing bars can be avoided.

The use of ultrasonic welding with polyethylene films of the invention allows the formation of excellent seal strengths, in most cases comparable to those that can be achieved using conventional heat sealing technology. Ultrasonic sealing is therefore an option when a seal needs to be effected in the presence of a contaminants for example.

The present inventors have now found that certain films produced with certain linear low density multimodal polyethylenes can withstand the high forces/pressures needed for the ultrasonic sealing better than other polyethylene film materials of a similar density. Many of the comparative grades illustrated in the examples below are suggested for their heat sealing behaviour but do not perform well under ultrasonic welding conditions.

The inventors have realised that multimodal LLDPE polymers are ideal for use in polymer films for ultrasonic welding. In particular, Ziegler Natta produced multimodal LLDPE is ideal for use in films for ultrasonic welding. Still more preferably, the use of a multimodal LLDPE terpolymer is preferred and most especially the use of a Ziegler Natta produced multimodal LLDPE terpolymer is ideal for use in the manufacture of a film for ultrasonic sealing.

Thus, in monolayer films multimodal LLDPEs can be used successfully in ultrasonic welding, in particular Ziegler Natta based multimodal LLDPEs. These polymers offer excellent sealing speed. Whilst multimodal LLDPE polymers made using metallocenes are often not useful on their own in a heat sealing environment as they are too sticky, these polymers can be used in ultrasonic welding, in particular if the welding conditions are relatively benign. Multimodal LLDPEs also outperform unimodal polyethylenes in terms of ultrasonic seal strength and properties.

In multilayer films, any multimodal LLDPE copolymer can be used in the layer adjacent the sealing layer or in the sealing layer but it is preferred if the sealing layer contains a multimodal LLDPE polymer based on a Ziegler Natta catalyst.

In particular, the inventors suggest that certain linear low density multimodal terpolymers are ideal for use in ultrasonic welding applications in both monolayer and multilayer films.

The linear low density multimodal copolymers and terpolymers of use in the manufacture of the films of the invention are not themselves new. The polymers of interest are known in conventional film applications, i.e. for use in heat sealed packaging, but we have found that certain linear low density multimodal copolymers, in particular terpolymers, also possess remarkable ultrasonic sealing capability which sets them apart from the countless other film grades on the market. Not only therefore do the film grades of this invention out perform well know film grades such as Exceed 1018 but the terpolymers of the invention outperform other multimodal grades which are not based on a terpolymer structure.

Without wishing to be limited by theory, the inventors surmise that the preferred multimodal polymers of use in the invention possess a generally broader molecular weight distribution than conventional heat sealing polyethylenes. The presence of the broader Mw/Mn range and hence the presence of a high molecular weight tail appears to improve performance when the product is ultrasonically welded. Moreover, the terpolymers possess a comonomer rich fraction within a multimodal polymer structure. Whilst the overall density of the polymer is maintained, the terpolymer structure leads to the presence of a low density fraction within the polymer that melts easily and contributes to the seal strength. This low density component forms only a fraction of the polymer which retains the same overall density. The terpolymers described herein are therefore ideal for use in ultrasonic welding applications but also have a proven record of utility within heat sealable films.

## Summary of Invention

Thus viewed from one aspect the invention provides a process for sealing a polyethylene film to a substrate, preferably to a polyethylene film substrate, comprising bringing said polyethylene film and said substrate into contact and subjecting at least a part of the contact area to ultrasound so as to form a seal between said film and said substrate; wherein

said polyethylene film comprises a multimodal linear low density polyethylene terpolymer comprising ethylene and at least two C3-20 alpha olefin comonomers and having a density of 905 to 940 kg/m$^3$.

Viewed from another aspect, the invention provides a process for sealing a polyethylene film to a substrate, preferably to a polyethylene film substrate, comprising bringing said polyethylene film and said substrate into contact and subjecting at least a part of the contact area to ultrasound so as to form a seal between said film and said substrate; wherein

said polyethylene film comprises a multimodal linear low density polyethylene copolymer comprising ethylene and at least one C3-20 alpha olefin comonomer and having a density of 905 to 940 kg/m$^3$.

Viewed from another aspect the invention provides a process for sealing a monolayer polyethylene film to a substrate, preferably to a polyethylene film substrate, comprising bringing said monolayer polyethylene film and said substrate into contact and subjecting at least a part of the contact area to ultrasound so as to form a seal between said monolayer film and said substrate;

wherein said monolayer polyethylene film comprises a multimodal linear low density polyethylene copolymer comprising ethylene and at least one C3-20 alpha olefin comonomer and has a density of 905 to 940 kg/m$^3$ and preferably wherein said copolymer is produced using a Ziegler Natta catalyst.

Viewed from another aspect the invention provides a process for sealing a multilayer polyethylene film having at least adjacent layers A and B to a substrate, preferably to a polyethylene film substrate, comprising comprising bringing layer A of said polyethylene film and said substrate into contact and subjecting at least a part of the contact area to ultrasound so as to form a seal between said A layer of said film and said substrate;

wherein said multilayer polyethylene film comprises in said B layer a multimodal linear low density polyethylene copolymer comprising ethylene and at least one C3-20 alpha olefin comonomer and having a density of 905 to 940 kg/m$^3$.

Viewed from another aspect the invention provides a process for sealing a multilayer polyethylene film having at least adjacent layers A and B to a substrate, preferably to a polyethylene film substrate, comprising bringing layer A of said polyethylene film and said substrate into contact and subjecting at least a part of the contact area to ultrasound so as to form a seal between said A layer of said film and said substrate;

wherein said multilayer polyethylene film comprises in said A layer a multimodal linear low density polyethylene copolymer comprising ethylene and at least one C3-20 alpha olefin comonomer and having a density of 905 to 940 kg/m$^3$ said copolymer preferably being produced using a Ziegler Natta catalyst.

Viewed from another aspect the invention provides the use of ultrasound in the sealing of a polyethylene film to a substrate wherein said film comprises a multimodal linear low density polyethylene terpolymer comprising ethylene and at least two C3-20 alpha olefin comonomers and having a density of 905 to 940 kg/m$^3$; or wherein said film is a monolayer or multilayer film as hereinbefore defined.

Viewed from another aspect the invention provide a process for the packaging of a product, in particular a heat sensitive product, comprising providing a container having an open end said container comprising a polyethylene film; filling said container with said product by dispensing said product through the open end of the container; and sealing said container by ultrasonically welding the open end; wherein said film comprises a multimodal linear low density polyethylene terpolymer comprising ethylene and at least two C3-20 alpha olefin comonomers and having a density of 905 to 940 kg/m$^3$; or wherein said film is a monolayer or multilayer film as hereinbefore defined.

Viewed from another aspect the invention provides a process for the packaging of a product, in particular a heat sensitive product, comprising forming a container having an open end from a polyethylene film; filling said container with said product by dispensing said product through the open end of the container; and sealing said container by ultrasonically welding the open end to itself wherein the film comprises a multimodal linear low density polyethylene terpolymer comprising ethylene and at least two C3-20 alpha olefin comonomers and having a density of 905 to 940 kg/m$^3$; or wherein said film is a monolayer or multilayer film as hereinbefore defined.

Viewed from another aspect the invention provides an ultrasonically sealed container obtainable by a process as hereinbefore defined.

## Definitions

By polyethylene is meant a polymer containing at least 70 wt% of ethylene residues, preferably at least 80 wt% of ethylene residues, preferably at least 85 wt% ethylene residues.

The term LLDPE means linear low density polyethylene and is a term of the art. LLDPE's of the invention have a density in the range 905 to 940 kg/m$^3$.

The term terpolymer is used to imply the presence of ethylene and at least two other C3-20 alpha olefin comonomers. Preferably, there are only two comonomers in a terpolymer. The term multimodal linear low density polyethylene terpolymer will be abbreviated as "terpolymer" herein.

The term copolymer is used to indicate the presence of one or more alpha olefin comonomers to ethylene. The term copolymer encompasses terpolymers therefore. A polymer having a single comonomer is called a binary copolymer herein.

Some LLDPEs of the invention must be obtained using a Ziegler Natta catalyst as opposed to another type of polyethylene catalyst, in particular a metallocene type catalyst. Ziegler Natta catalysts are very well known in this industry and the skilled person is familiar with their use and knows these give different characteristics in the final polymer than polymers obtained using metallocene catalysts.

The A layer of any multilayer film of the invention is an outer sealing layer. That layer is sealed to the substrate via ultrasonic welding. The B layer must touch the A layer, i.e. they are adjacent with no intervening layers such as an adhesive layer.

The substrate and polyethylene film are brought into contact, i.e. so that at least a part of the film touches at least part of the substrate. Pressure may be applied so ensure good contact between the substrate and film. Similarly, pressure may be applied to close the open end of the container before ultrasound is applied to create the seal.

All films of the invention are non oriented, i.e. they are not stretched in the machine direction to form an MDO type film or stretched biaxially to form a biaxially oriented film.

## Detailed Description of Invention

This invention relates to ultrasonic welding of a film comprising a multimodal LLDPE copolymer, preferably a multimodal LLDPE terpolymer. Remarkably, films comprising the copolymers and terpolymers defined herein show very good ultrasonic sealing properties, in particular in terms of elongation at max force and seal strength. Surprisingly, films of the invention can be effectively sealed with the copolymer and terpolymer of the invention in the sealing layer or in the layer adjacent the sealing layer (i.e. the B layer).

## Copolymers, preferably Terpolymers

The films of the invention comprise a multimodal LLDPE copolymer, preferably a terpolymer. Monolayer films preferably comprise a Ziegler Natta based multimodal LLDPE copolymer. Multilayer films can comprise a multimodal LLDPE copolymer in the B layer of the film but if a multimodal LLDPE copolymer is present in the A layer (i.e. the sealing layer) then it is preferably a Ziegler Natta produced multimodal LLDPE copolymer as per the monolayer films.

Whilst it is possible for the films of the invention to comprise a blend of multimodal LLDPEs, preferably only one such polymer is present in any layer of a film, or in the film as a whole. Alternatively, a multimodal LLDPE might be present in the A layer and the same or different multimodal LLDPE might be present in the B layer of a multilayer film.

The $MFR_2$ of the copolymers, preferably terpolymers of the invention is preferably in the range 0.01 to 20 g/10min, e.g. 0.05 to 10 g/10min, preferably 0.1 to 6.0 g/10min. The $MFR_2$ of the copolymers, preferably terpolymers of the invention is highly preferably in the range of 0.10 to 5 g/10min, such as 0.1 to 2 g/10min.

The $MFR_{21}$ of the copolymers, preferably terpolymers of the invention is preferably in the range 5 to 50 g/10min, e.g. 10 to 40 g/10min.

The copolymers, preferably terpolymers of the invention may have a density in the range of 905 to 940 kg/m$^3$, preferably 925-940 kg/m$^3$, preferably such as 930 to 940 kg/m$^3$.

The weight average molecular weight Mw of the copolymers, preferably terpolymers of the invention is preferably no more than 250,000, preferably no more than 200,000, such as 150,000 or less. The minimum value is preferably 50,000. The Mw/Mn of the copolymers, preferably terpolymers can vary. Preferred Mw/Mn values are 3 or more, such as 6 or more, even 10 or more. Ranges of 3.5 to 40 are envisaged, preferably 8 to 30, such as 8 to 20.

Copolymers of the invention contain at least one comonomer. Those comonomers are preferably C3-10 alpha olefin comonomers. Copolymers can be binary copolymers and therefore contain only one comonomer. Preferred comonomers are 1-butene, 1-hexene, and 1-octene. Preferred copolymers are however terpolymers.

The terpolymer contains at least two, preferably only two, comonomers. Those comonomers are preferably C3-10 alpha olefin comonomers. Preferably the comonomers are selected from 1-butene, 1-hexene or 1-octene. It is preferred if the comonomers employed are 1-butene and 1-hexene.

The amounts of comonomer present in the copolymers, preferably terpolymers, of the invention can range from 0.5 to 15 wt%, such as 0.5 to 12 wt%, e.g. 1 to 10 wt%.

Alternatively, the overall comonomer content in the terpolymer is preferably 0.3 to 7.0 % by mol, more preferably 0.6 to 4.5 % by mol, more preferably 1.0 to 3.5 % by mol and most preferably 1.2 to 2.8 % by mol. Butene may be present in an amount of 0.1 to 3.0 % by mol, preferably 0.2 to 2.0 % by mol, more preferably 0.3 to 1.5 % by mol and most preferably 0.4 to 1,2 % by mol.

The C6 to C 12 alpha olefin may be present in an amount of 0.2 to 4.0 % by mol, preferably 0.4 to 2.5 % by mol, more preferably 0.7 to 2.0 % by mol and most preferably 0.8 to 1,8 % by mol.

The copolymer, preferably terpolymer, is multimodal. A unimodal LLDPE possesses a single peak in its GPC spectrum as it is made in a single stage process.

Usually, a polyethylene composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. polyethylene (I), will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer there is by definition a lower molecular weight component (LMW) and a higher molecular weight component (HMW). The LMW component has a lower molecular weight than the higher molecular weight component. In a multimodal polymer of use in this invention at least one of the LMW and HMW components is a copolymer of ethylene containing at least one C3-20 alpha olefin comonomer. Further preferably, at least HMW component is an ethylene copolymer containing at least one C3-20 alpha olefin comonomer such as one or two comonomers. Further preferably, also the lower molecular weight (LMW) component may be an ethylene copolymer containing at least one C3-20 alpha olefin comonomer.If one of the components is a homopolymer, then LMW is the preferably the homopolymer.

The multimodal polyethylene may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

The copolymer, preferably terpolymer of the invention is preferably bimodal and contains a LMW and HMW component. The LMW component has a lower Mw than the higher Mw component. The Mw difference may be at least 5000 units. Alternatively viewed, the $MFR_2$ of the two components should differ by at least 5 g/10 min with the LMW component having the higher value.

The LMW component of the copolymer, preferably terpolymer may have $MFR_2$ of at least 50, preferably 50 to 3000 g/10 min, more preferably at least 100 g/10 min. A preferred range of $MFR_2$ of the LMW component is e.g. 110 to 500 g/10 min. The molecular weight of the low molecular weight component should preferably range from 20,000 to 50,000, e.g. 25,000 to 40,000.

It is believed that the high MFR of the LMW component may contribute to good mobility of chains during sealing and hence good seal strengths.

The density of the lower molecular weight component may range from 930 to 980 $kg/m^3$, e.g. 940 to 970 $kg/m^3$, more preferably 945 to 955 $kg/m^3$ in the case of copolymer and 940 to 975 $kg/m^3$, especially 960 to 972 $kg/m^3$ in the case of homopolymer.

The lower molecular weight component forms preferably from 30 to 70 wt%, e.g. 40 to 60% by weight of the terpolymer with the higher molecular weight component forming 70 to 30 wt%, e.g. 60 to 40% by weight.

The higher molecular weight component preferably has a lower $MFR_2$ and a lower density than the lower molecular weight component.

It is most preferred if the copolymer comprises an ethylene homopolymer component and a copolymer component, ideally an ethylene copolymer with at least one of 1-hexene or 1-butene. The LMW component is the homopolymer component and the HMW component is the copolymer component in this regard. It is also possible for the copolymer to comprise two copolymer components in which the same comonomer is used, such as two ethylene butene copolymers.

It is most preferred if the terpolymer comprises an ethylene homopolymer component and a terpolymer component, ideally an ethylene, 1-hexene, 1-butene terpolymer component. The LMW component is the homopolymer component and the HMW component is the terpolymer component in this regard.

Alternatively, the multimodal terpolymer might comprise two copolymer fractions as long as there are two comonomers present. For example, the terpolymer might comprise an ethylene butene fraction and an ethylene hexene fraction. In this embodiment the ethylene butene fraction is preferably the lower Mw component. In a further embodiment, the invention comprises an ethylene copolymer fraction and an ethylene terpolymer fraction. For example, the terpolymer may comprise an ethylene butene component (ideally as the LMW component) and an ethylene butene hexene terpolymer fraction. All these options are regarded as terpolymers herein.

The use of an ethylene homopolymer LMW component with a terpoylmer HMW component is preferred, ideally a C2/C4/C6 terpolymer.

Polymers meeting the definitions above are known in the art and are available from Borealis and others, e.g. under the Borstar type trade name.

An especially preferred polymer is BorShape™ FX1001 or FX1002 (Borealis AG - Vienna, Austria) or BorShape™ FX1001 (Borealis AG - Vienna, Austria).

## Preparation of Polyethylene

The copolymers of the invention can be produced using Ziegler Natta catalysis or single site catalysis (mLLDPE), but are preferably produced using a Ziegler Natta catalyst. Such catalysts are well known in the art. Thus, for the preparation of the polymers of the present invention polymerisation methods well known to the skilled person may be used. As catalyst any ordinary stereospecific Ziegler-Natta catalysts can be used. An essential component in those catalysts are solid catalyst components comprising a titanium compound having at least one titanium-halogen bond, an internal electron donor compound and a magnesium halide in active form as a carrier for both the titanium component and the donor compound. The catalysts may contain - as internal electron donor - compounds selected from ethers, ketones, lactones, compounds containing N, P and/or S atoms and esters of mono and dicarboxylic acids.

Multimodal, e.g. bimodal, polymers are preferably produced by blending each of the components *in-situ* during the polymerisation process thereof (so called in-situ process) in a manner known in the art.

The multimodal copolymers useful in the present invention are preferably obtained by *in-situ* blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the multimodal polymers of the invention are produced in at least two-stage polymerization using the same catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer.

A chain-transfer agent, preferably hydrogen, can be added as required to the reactors. A prepolymerisation step may precede the actual polymerisation process.

The polymers of the invention are not themselves new and processes for their manufacture are known. They are also commercially available.

It will be appreciated that both the polyethylene components of the films of the invention may contain standard polymer additives. These typically form less than 5 wt%, such as less than 2 wt% of the polymer material. Additives, such as antioxidants, phosphites, cling additives, pigments, colorants, fillers, anti-static agent, processing aids, clarifiers and the like may also be included in the polymers of the present invention and hence in films formed from them. Films may also contain standard additives such as antiblocking agents, slip agents, mold release agents and so on. These additives are well known in the industry and their use will be familiar to the artisan.

**Film Manufacture**

The films of the invention are blown or cast films manufactured by (co)extrusion and blowing/casting as is well known in the art. The films of the invention are preferably 15 to 300 microns in thickness, preferably 25 to 200 microns, more preferably 30 to 150 microns, such as 30 to 120 microns, especially 35 to 100 microns.

Films may be monolayered or multi-layered. If monolayered films are desired, it is preferred if the Ziegler Natta copolymers of the invention, ideally the terpolymers of the invention are the major polymer present. Preferably, the copolymer or terpolymer forms at least 50 wt% of the monolayer film. Some monolayer films might comprise at least 75 wt% of the copolymer or terpolymer, or at least 85 wt%. Some monolayer films consist essentially of the multimodal copolymer or terpolymer such as the Ziegler Natta multimodal copolymer or terpolymer. If other polymers are present within the monolayer film, it is preferred if those are LDPE or other LLDPEs. Other LLDPEs that are present are preferably not multimodal.

LDPE's of use in this regard are homopolymers made in a high pressure process as is known in the art. They have a density of between 905 and 935 kg/m$^3$. The $MFR_2$ of such LDPE compounds may be in the range 0.01 to 20 g/10min, e.g. 0.05 to 10 g/10min, preferably 0.1 to 6.0 g/10min.

Other LLDPE's are preferably unimodal LLDPEs preferably with a single comonomer. The $MFR_2$ of such compounds may be in the range 0.01 to 20 g/10min, e.g. 0.05 to 10 g/10min, preferably 0.1 to 6.0 g/10min. The $MFR_2$ is highly preferably in the range of 0.10 to 5 g/10min, such as 0.1 to 2 g/10min.

The other LLDPE may have a density in the range of 905 to 940 kg/m$^3$, preferably 910-935 kg/m$^3$, preferably such as 915 to 930 kg/m$^3$.

The content of other components within the monolayer films may be up to 50 wt%, such as up to 40 wt%, e.g. 10 to 30 wt%.

It is preferred if films of the invention are multilayered. Multilayer films are preferably formed from at least two layers, ideally at least three layers, such as 3 layers, 5 layers or 7 layers. Films preferably comprise therefore at least adjacent layers A and B, preferably A, B and C.

The (A) layer of the film is an external layer and is the sealing layer herein. It is preferably involved in sealing of the film (ideally to itself). Said layer (A) preferably comprises at least a Ziegler Natta multimodal LLDPE copolymer or more preferably a multimodal LLDPE terpolymer as defined herein.

It is possible that the (A) layer is blended with other polymer components but the multimodal copolymer preferably forms at least 50 wt% of the (A) layer. The (A) layer might therefore be a blend of that multimodal LLDPE copolymer with another LLDPE as defined above in connection with monolayer films, in particular a unimodal LLDPE. In some embodiments, a metallocene unimodal LLDPE may be the other LLDPE.

The (A) layer may also be a blend of the multimodal LLDPE copolymer component and a very low density polyethylene (vLDPE) having a density of less than 905 kg/m$^3$, such as 860 to less than 905 kg/m$^3$. Again, the content of other components within the A layer films may be up to 50 wt%, such as up to 40 wt%, e.g. 10 to 30 wt%. The (A) layer may also be a blend of the multimodal LLDPE copolymer component and an LDPE as described above in connection with the monolayer films.

Where the A layer comprises a copolymer of the invention, the nature of the B layer is less critical. The B layer might comprise a blend of LDPE and unimodal LLDPE or a blend of LDPE and HDPE (e.g. having a density of more than 940 kg/m$^3$) as described herein. However, the B layer too may contain a multimodal LLDPE copolymer of the invention. That might be the same or a different copolymer of the invention as used in the A layer.

In general the B layer might comprise any LLDPE, HDPE or LDPE to give the film a preferred property such as economy, strength and so on.

In a preferred embodiment, the A layer comprises a Ziegler Natta multimodal binary copolymer whilst the B layer comprises a terpolymer as herein defined, e.g. the A layer comprises at least 50 wt% of a Ziegler Natta multimodal binary copolymer whilst the B layer comprises at least 50 wt% of a terpolymer as herein defined.

In an alternative embodiment the (A) layer comprises a multimodal metallocene LLDPE copolymer of the invention. Such metallocene multimodal LLDPEs may have a density of 910 to 925 kg/m$^3$. That multimodal metallocene might be combined with an LDPE, e.g. as described above in relation to the monolayer film.

In another alternative embodiment the (A) layer does not comprise the multimodal LLDPE copolymer of the invention. It may instead comprise a blend of another LLDPE such as a unimodal LLDPE and LDPE, e.g. as described above in relation to the monolayer film. The A layer may also contain a vLDPE such as up to 40 wt% vLDPE having a density of less than 905 kg/m$^3$ optionally blended with a unimodal LLDPE.

Where the (A) layer is free of the multimodal LLDPE copolymer of the invention, the (B) layer comprises, e.g. consist of, a multimodal LLDPE copolymer of the invention. At least 50 wt% of the multimodal copolymer should be present in the (B) layer in that embodiment, such as at least 70 wt%, preferably at least 80 wt%. The (B) must be adjacent the (A) layer in all embodiments of the invention. Also, it is preferred in this embodiment that the (A) layer has a thickness of 30 microns or less.

It is preferred that the multimodal LLDPE copolymer in the (B) layer is a Ziegler Natta LLDPE as described above in connection with a monolayer film. Ideally, the polymer is a terpolymer as described above in connection with the monolayer film.

A most preferred embodiment is therefore based on a multilayer film in which the A layer comprises a blend of multimodal LLDPE and LDPE, e.g. a multimodal metallocene LLDPE and LDPE, and the B layer comprises at least 50 wt% of the multimodal LLDPE copolymer of the invention.

Another most preferred embodiment is therefore based on a multilayer film in which the A layer comprises a blend of unimodal LLDPE and LDPE and the B layer comprises at least 50 wt% of the multimodal LLDPE copolymer of the invention.

Films of the invention might contain further layers such as a layer C adjacent layer B. Films of the invention therefore preferably contain a layer A and a layer B as herein defined. If present a layer (C) can contain a variety of polymers such as HDPE, LDPE, a polypropylene, a barrier layer e.g. based on polyamide and so on. Especially were the films of the invention comprise 5 or 7 layers, the presence of a barrier layer is preferred. There might also be adhesive layers present.

If present, layer (C) in such a film is preferably the same as layer B or layer A thus forming an ABA or ABB type film structure.

**Film layers**

The term "consisting essentially of" used below in relation to film layer materials is meant to exclude only the presence of other polyolefin components, preferably other polymers. Thus said term does not exclude the presence of additives, e.g. conventional film additives, i.e. each layer independently may contain conventional film additives such as antioxidants, UV stabilisers, acid scavengers, nucleating agents, anti-blocking agents, slip agents etc as well as polymer processing agent (PPA) and so on. Additives can be present as part of a masterbatch.

Films of the invention preferably comprise layers (A) and (B) below, especially layers (A), (B) and (C) below.

In most preferred embodiments, the following film structures are preferred:

**Layer (A)**

Accordingly, in a first preferable embodiment (i) of the invention, said layer (A) comprises at least the Ziegler Natta produced multimodal LLDPE copolymer, preferably terpolymer of the invention. That might be admixed with a unimodal LLDPE or very low density polyethylene. In this embodiment (i) a layer (A) preferably comprises 40-75 wt% of multimodal LLDPE co or terpolymer, more preferably 40 to 70 % of multimodal LLDPE co or terpolymer. Layer (A) of the embodiment (i) preferably comprises 25-60 wt% unimodal LLDPE or very low density polyethylene, more preferably 30-60 wt%. The use of an excess of the multimodal terpolymer is especially preferred here. The use of 100 wt% of multimodal LLDPE of the invention is a further preferred option.

Alternatively, layer (A) comprises a blend of unimodal or preferably bimodal LLDPE and LDPE or unimodal LLDPE (or preferabyl bimodal LLDPE) and vLDPE having a density of less than 905 kg/m$^3$. In this embodiment (i) a layer (A) preferably comprises 40-75 wt% of LLDPE (such as a unimodal metallocene LLDPE), more preferably 40 to 70 % of the LLDPE. Layer (A) of the embodiment (i) preferably comprises 25-60 wt% LDPE or vLDPE, more preferably 30-60 wt%. The use of a 50/50 wt% split of LLDPE and LDPE/vLDPE is especially preferred here.

**Layer (B)**

Layer (B) preferably comprises at least 50 wt%, preferably at least 60 wt%, more preferably at least 70 wt% of a multimodal LLDPE copolymer or terpolymer. In some embodiments even about 80 wt% or more of multimodal LLDPE co or terpolymer is preferred. The use of a 100wt% terpolymer layer B is most preferred. Where layer A contains the multimodal LLDPE copolymer of the invention however, layer B may also comprise a blend of unimodal LLDPE and LDPE or unimodal LLDPE and vLDPE having a density of less than 905 kg/m$^3$. In this embodiment layer (B) preferably comprises 40-75 wt% of LLDPE (such as a unimodal metallocene LLDPE), more preferably 40 to 70 % of the LLDPE. Layer (B) preferably comprises 25-60 wt% LDPE or vLDPE, more preferably 30-60 wt%. The use of a 50/50 wt% split of LLDPE and LDPE/vLDPE is especially preferred here.

**Layer (C)**

Said layer (C) may have a polymer composition as described in relation to layer (A) above or layer (B) above. Preferably layers (A) and (C) are identical in a ABA type film structure. Alternatively layer C might contain an HDPE having a density of more than 940 kg/m$^3$, a barrier layer and so on.

The film thickness distribution (%) of a ABC layer film is preferably 10 to 35%/30-80%/10-35% of the total film thickness (100%).

It is preferred that the sealing layer (A) forms at least 18% of total thickness of the film, preferably at least 20%, especially at least 25% of the thickness of the film. If the sealing layer is too thin, the sealing properties of the film are poorer. If the seal layer (A) is too thick however and the copolymer is present in the (B) layer, that can compromise seal strength.

The films of the invention can possess valuable mechanical properties such as high impact strength, stiffness, heat resistance and tensile properties.

In order to manufacture films to be sealed according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well known process.

The film of the invention will typically be produced by extrusion through an annular die, blowing into a tubular film by forming a bubble which is collapsed between nip rollers after solidification. Conventional film production techniques may be used in this regard. Typically, the layers will be extruded at a temperature in the range 160°C to 240°C, and cooled by blowing gas (generally air) at a temperature of 10 to 50°C to provide a frost line height of 2 to 8 times the diameter of the die. The blow up ratio should generally be in the range 1.8 to 5, preferably 2 to 4. Suitable die diameters are in the range 100 to 250 mm.

The films of the invention are not oriented, i.e. not machine direction oriented or biaxial oriented films.

**Substrate**

The substrate to which the film is sealed can be the same as or different from the actual film but both film and substrate are preferably based on polyethylene polymers. This means therefore that the substrate comprises a polyethylene component. Typically, the film is sealed to itself or another identical film as is known in the art.

In the films of the invention, the film can be monolayer or multilayer. If the film is a multilayer film then the multimodal LLDPE copolymer can be in the layer which is sealed to the substrate or it can form a layer directly adjacent to the sealing layer. Thus in an ABC film construction, the copolymer might form the (B) layer to a sealing layer (A). Whilst the copolymer may not therefore be in the actual sealing layer, during ultrasonic welding the (B) layer also melts to an extent to assist in the sealing process.

It is surprising in fact that the layer (B) can influence the sealing behaviour but we observe that it can when a copolymer of the invention is employed in the (B) layer. Again, without wishing to be limited by theory we perceive that the presence of a low density, high comonomer fraction within the terpolymer offers the beneficial sealing properties.

In a preferred embodiment, the substrate is a film as defined herein for the film of the invention. Still more preferably the substrate and film are the same film, i.e. the film is being ultrasonically welded to itself. The film might therefore be manipulated so that the (A) layer is sealed to the (A) layer, perhaps forming a sealed CBAABC type structure.

The substrates of the invention can, in addition to a layer based on a polyethylene polymer comprise barrier layers such as those based on polyamides, ethylene vinyl alcohol, aluminised layers, ethylene acrylate polymers and so on. The substrate may also be a laminate.

In general, the formation of a suitable substrate film is within the skills of the person skilled in the art.

**Ultrasonic Welding**

Once the film and substrate have been prepared a seal needs to be formed between them. This is achieved by ultrasonic welding. In ultrasonic welding heat is generated in the bonding area between the film and substrate by mechanical vibration, causing friction that cause the materials being sealed to plasticize, forging an insoluble connection between the parts.

Ultrasonic welding utilizes a welding tool (the sonotrode) that is typically oriented to apply vibrations horizontally or vertically. Sealing quality is very uniform because the energy transfer and the released internal heat remain constant and are limited to the sealing area.

Because ultrasonic welding has very low energy requirements, uses no consumables, requires no cooling water, and has modest space requirements, ultrasonic welding provides cost-effective, environmentally friendly solutions to the problem of polymer sealing.

The parts to be welded are firstly brought into contact and are sandwiched between a fixed shaped nest (anvil) and a sonotrode connected to a transducer. The frequency of the ultrasound can be tailored to effect a seal in the materials being sealed. At least part of the contact area between the film and substrate is therefore subjected to ultrasound. It will be appreciated that the film and substrate may be in contact with each other over a larger area than is actually sealed just due to the nature of the process.

Welding pressures can be around 1 to 2 bars, such as 1.5 to 2 bars.

The necessary ultrasound vibrations might vary depending on the nature of the film being sealed and so on. Typically, ultrasound frequencies in the range of 15 kHz to 70 kHz can be employed.

The time for which the sealing surfaces are exposed to ultrasound can be very short, such as 50 to 200 ms.

The ultrasonic energy melts the point contact between the film and the substrate to which the film is being sealed, creating a seal when the ultrasound is stopped (or the film moved away from the ultrasound source). Ultrasonic welding causes local melting of the plastic due to absorption of vibration energy.

The use of ultrasonic welding is highly advantageous as the film is not contacted with a hot sealing bar. The sonotrode remains cold throughout the process. This therefore prevents accumulation of molten polymer on sealing bar and hence intensive cleaning of that bar after sealing. There is therefore significantly reduced downtime by using ultrasonic welding as opposed to heat sealing.

An excellent seal can still be effected even if there is contamination present. It is common that one of the sealing surfaces might be contacted with the material being packaged contaminating the sealing surface. Despite such contamination a strong seal can still be formed using ultrasonic welding. It appears the application of the ultrasound mechanically removes the contaminant from the sealing area. This is important when the product being packaged is one that gives an odour when heated. For example, if pet food is heat sealed with contaminant on the sealing area, the result is a burnt pet food smell. The use of ultrasonic welding avoids that problem.

A further benefit of ultrasonic welding is the avoidance of film shrinkage. By avoiding high temperature, sealing shrinkage is minimised. Moreover we avoid exposing the contents of a package to high temperature. That is important if the product is one which degrades readily in heat.

It is preferred that during the ultrasonic welding operation the film does not shrink by more than 5 % in any direction.

The use of ultrasonic welding may allow more flexibility in film design for packaging. For ultrasonic welding hot tack is not an issue as heat flows after sealing into adjacent (colder) film layers. In case of heat sealing, the adjacent layers are hotter than the seal and that limits hot tack. This limits therefore the nature of films which can be used in the heat sealing environment.

This makes the invention ideal for the packaging of heat sensitive products.

The use of ultrasonic welding also allows a reduction in the head space in packaging. Typically a large head space is used to prevent heat from the sealing operation damaging goods packaged. With ultrasonic welding this problem can be overcome and less film per gram of packaged material might be needed.

A further major benefit of the use of ultrasonic welding relates to a saving in raw material costs. When forming a seal between surfaces using conventional heat sealing, the layers may overlap by as much as 10 mm. Much of this overlap is therefore wasted film. With ultrasonic welding this overlap can be reduced to 6 mm. In the context of 2000 packages per hr, that adds up to a significant reduction in wastage. The process of the invention is therefore ideal for the manufacture of mass produced packaging such as heavy duty shipping bags.

After sealing, the films of the invention offer excellent properties. The maximum seal force achieved using ultrasonic welding is as good as or better than can be achieved using conventional heat sealing. Max force values of 8N or more are achievable.

## Applications

The films of the invention can be employed in a wide variety of end applications however they are of particular interest in the manufacture of packaging, especially food, drink or medical packaging or packaging of goods in medium duty or heavy duty shipping sacks and pouches.

In particular the films may be utilised in form, fill and seal packaging technology or in the formation of stand up pouches. It is a particular feature of the invention that the materials described herein can be subjected to ultrasonic welding as well as conventional heat sealing. In particular, ultrasonic welding might be used to seal in the transverse direction whilst heat sealing used for the machine direction.

Preferably, films are sealed within a vertical Form Fill Seal (FFS) packaging line, in which the oriented film is initially welded from the flat film, preferably by ultrasonic welding. The film can then be welded ultrasonically with a first transverse seam, the package filled and closed by means of heat seal or ultrasonic welding.

In a typical FFS machine, the machine is loaded with a continuous flat roll of oriented film. The oriented film approaches the back of a long hollow conical tube, and when the centre of the plastic is near the tube, the outer edges of the film form flaps that wrap around the conical tube. The film is pulled downward around the outside of the tube and a vertical heat-sealing bar clamps onto the edges of the film, bonding the film by melting the seam edges together.

To start the bagging process, a horizontal sealing bar clamps across the bottom edge of the tube, bonding the film together, and cutting off any film below. The sealed tube end is then lowered onto a precision weighing table and the product to be bagged is dispensed through the long conical tube in the centre of the bag. When the gross weight of the product-filled bag is reached, filling stops, and the horizontal sealing bar seals the top of the bag, and simultaneously forms the bottom of the next bag above. This bag is then cut off from the tube and is now a sealed package. There are a number of sealing operations during an FFS process therefore and ultrasonic welding can be used instead of one or more of those heat sealing operations. In particular, the ultrasonic welding replaces any transverse direction heat seal apparatus.

Dual systems are also available for four side sealed packages, as well as packages requiring different materials for each side. Dual systems use two rolls of starting film instead of one, which are fed in from opposite sides of the machine. The bottom and top layers are heat sealed together to form the pouch, and the product is loaded from the top. The pouch with loaded product then advances downwards and the top is sealed and pouch is cut off. The sealing of the top of the pouch forms the bottom of the next pouch.

Again ultrasonic welding can be used to effect one or more of these heat sealing operations.

The films are especially useful in heavy duty shipping sacks or medium duty shipping sacks. To provide strength, heavy duty shipping sacks are often provided with gussets. Where there is a gusset, the film thickness is especially high as there are numerous film folds to seal together. The use of heat sealing in that environment is difficult as the heat required to seal all layers is so high. The use of ultrasonic welding can create a high quality seal independent of the number of layers present.

Stand-up pouches are often made by means of heat sealing. The actual closure of the pouch after filling can be effected by ultrasonic welding. It is a further respect of the invention therefore that the oriented films of the invention can be both heat sealed and ultrasonically welded to a substrate. Where more than one seal is required in a package, both techniques could be used in package formation.

This invention is of particular utility in the formation of heat sensitive products including all types of human food/drinks, pet food, heat sensitive non consumable products and so on.

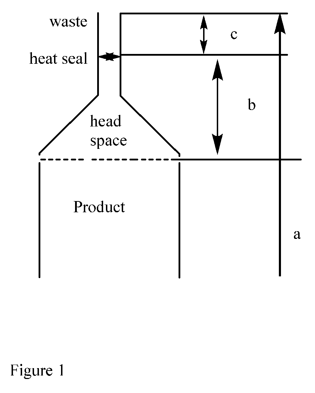

A particular feature of the invention is represented in figure 1. Here a form fill and seal process is depicted in which a is the length of the FFS bag, b is the head space within the bag and c is the welding overhang. Using ultrasonic welding it is envisaged that the values of both b and c can be reduced, perhaps by a combined amount of up to 10%. That might allow a 70 g heavy duty sack to be reduced to a 69 g heavy duty sack. In the context of 400 tonnes of bags per annum, that is an additional 80,000+ bags.

The invention will now be described with reference to the following non limited examples and figure.

## Melt Flow Rate

The melt flow rate (MFR) is determined according to ISO 1133 and is indicated in g/10 min. The MFR is an indication of the melt viscosity of the polymer. The MFR is determined at 190°C for polyethylene and 230°C for polypropylene. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

**Comonomer Content (NMR):**

The comonomer content was determined by using $^{13}$C -NMR. The $^{13}$C -NMR spectra were recorded on Bruker 400 MHz spectrometer at 130 °C from samples dissolved in 1,2,4-trichlorobenzene/benzene-d6 (90/10 w/w).

**Molecular weight**

$M_w$, $M_n$ and MWD are measured by Gel Permeation Chromatography (GPC) according to the following method:

The weight average molecular weight $M_w$ and the molecular weight distribution (MWD = $M_w$/$M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where $Mw_b$ is the weight average molecular weight of the blend,
$w_i$ is the weight fraction of component "i" in the blend and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where $Mn_b$ is the number average molecular weight of the blend,
$w_i$ is the weight fraction of component "i" in the blend and
$Mn_i$ is the number average molecular weight of the component "i".

**Density**

Density of the polymer was measured according to ISO 1183 / 1872-2B.

General definitions:

- **Seal width** is determined by sealing bar, typical seal width dimensions are in the range of about 1 mm or below up to 3 or 4 or 5 mm;
- **Seal length** is determined by opening dimension of the final articles or the dimension of the sealed specimen, so can be in the range of e.g. 20 cm or the like.
- **Seal length** of tensile specimen corresponds to the width of the specimen, i.e. in the range of e.g. 15 or 25 mm

Film processing conditions:

Film Samples were produced by extrusion on commercial scale 7 layer extrusion blown film line with die diameter 300 mm, frost line height 3DD, at a blow up ratio (BUR) 1:2.5 and die gap 1.5 mm, with internal bubble cooling.

The extruder comprised seven extruders in series with 50 mm diameter and L/D 30. Extruder temp setting: 210 - 225°C to form 40μm monofilms or 3-layered films with a layer thickness distribution of 25:50:25, if otherwise not specified (examples also with 33:34:33). Seven extruders to be utilised AABBBCC to form 3 layer film structure or monolayer structure AAAAAAA..

US welding conditions:

- Press USP 3000

    Sonotrode no. 9069 (titan)
    Converter SE2010
    Booster 1.5
    Anvil R5/90°, stainless steel

- Trials performed at 20kHz,

    amplitude 65μm (peak-peak), pressures 1.5 - 4 bar,
    (corresponds forces 600 - 1800 N)

- Seal length: 20 cm,
- Orientation of the seal: in transverse direction in respect to blown film production.
- Film thickness: 40μm films, if not otherwise mentioned

Tensile testing to evaluate seals:

Parameters:

- Sample width - 15 mm
- Temperature - 23 °C
- Preload - 0,15 N
- Speed preload - 2 mm/min
- Test speed - 200 mm/min
- Clamping distance - 100 mm

Polymer descriptions:

Hype 35 - Basell, metallocene bimodal copolymer of the invention MFR2 g/10min = 1,4, density 935 kg/m$^3$

BorShape FX1001 Borealis, Terpolymer of the invention (ZN), MFR5 = 0.9 g/10min, density 933 kg/m$^3$

BorShape FX1002, Borealis Terpolymer of the invention (ZN), MFR5 = 2 g/10min, density 937 kg/m$^3$

Enable 3505CH, Exxon, metallocene unimodal with LCB (long chain branching) LLDPE copolymer, MFR2 = 0.5 g/10min, density 935 kg/m$^3$

Exceed 1018, Exxon, metallocene unimodal LLDPE copolymer, MFR2 = 1 g/10min, density 918 kg/m$^3$

FK1820A-01 Borealis, metallocene bimodal LLDPE copolymer of the invention, MFR2 = 1.3 g/10min, density 918

kg/m$^3$

Evolue SP1510, Prime polymers, metallocene bimodal LLDPE copolymer of the invention, MFR2 = 1.0 g/10min, density 915 kg/m$^3$

FB4370 Borealis, ZN bimodal LLDPE of the invention, MFR5 = 2 g/10min, density 931 kg/m$^3$

FB4230 Borealis, ZN bimodal LLDPE of the invention, MFR5 = 2 g/10min, density 923 kg/m$^3$

FB2310 Borealis, ZN bimodal LLDPE of the invention, MFR5 = 0.9 g/10min, density 931 kg/m$^3$

LD - FT5230, Borealis, LDPE, MFR2 = 0.7 g/10min, density 923 kg/m$^3$

FG5224, Borealis, unimodal LLDPE, MFR2 = 1 g/10min, density 922 kg/m$^3$

Queo 0201, Borealis, unimodal VLDPE copolymer, MFR = 1.1 g/10min, density 902 kg/m$^3$

A monolayer film consisting of the grades identified in table 1 was prepared according to the protocol above:

**Monolayer films with density 930-940 kg/m$^3$**

| Material | Welding time [ms] | Welding pressure [bar] | Comments |
|---|---|---|---|
| Hype 35* | 120 | 1.5 | Not as good, brittle |
| FX1001* | 120 | 1.5 / 2.0 | Good seal |
| FX1002* | 120 | 1.5 | Good seal |
| Enable 3505CH | 120 | 2.0 | Very hard to seal |
| * of the invention | | | |

The properties of the monolayer films are illustrated in table 2:

Table 2

| Material | Welding time [ms] | Welding pressure [bar] | Max Force [N] | Elongation at max force [%] |
|---|---|---|---|---|
| Hype 35* | 120 | 1.5 | 7.7 | 8 |
| FX1001* | 120 | 1.5 | 8.7 | 37 |
| FX1001* | 120 | 2.0 | 10.0 | 90 |
| FX1002* | 120 | 1.5 | 7.9 | 40 |
| Enable 3505CH | 120 | 2.0 | 7.3 | 5 |
| *Of the invention | | | | |

Terpolymer materials show good seal (elongation at max force) in monolayer construction. Metallocene multimodal LLDPEs do not seal as well. High elongation values (>20%) gives in indication that the seal quality is good/strong, as not only the seal is breaking, but the film elongates first next to the seal.

In table 3, further monolayer films are produced according to the protocols above but using lower density materials.

**Table 3 Monolayer films with density 910-920 kg/m$^3$**

| Material | Welding time [ms] | Welding pressure [bar] | Comments |
|---|---|---|---|
| Exceed 1018 | 80 | 1.5 | Reduced time, still not very good |
| FK1820A-01* | 80 | 1.5 | Good |

(continued)

| Material | Welding time [ms] | Welding pressure [bar] | Comments |
|---|---|---|---|
| Evolue 1510* | 80 | 1.5 | Good |
| * of the invention | | | |

Note that in order to effect sealing, weld pressure and time are reduced relative to the table 1 materials. At the same conditions as table 1 the seals were destroyed already. This shows that in monolayer construction, terpolymers outperform the binary copolymers.

Table 4

| Material | Welding time [ms] | Welding pressure [bar] | Max Force [N] | Elongation at max force % |
|---|---|---|---|---|
| Exceed 1018 | 80 | 1.5 | 6.6 | 95 |
| FK1820A-01* | 80 | 1.5 | 8.0 | 329 |
| Evolue 1510* | 80 | 1.5 | 8.2 | 307 |
| * of the invention | | | | |

The high elongation values than reported in table 2 are a function of the lower density of the polymer. Still the benefit, i.e. quality, of seal of the bimodal metallocene LLDPE on ultrasonic welding is visible both on seal force and elongation.

**Multilayer films**

Multilayer films as described in table 5 were prepared following the protocol above:

Table 5

| Coex structure (25/50/25) | Welding time [ms] | Welding pressure [bar] | Comments |
|---|---|---|---|
| AAB, A= FX1001*, B= Exceed + LD | 120 | 2.0 | Good, strong seal |
| ABA, A= Exceed + LD, B= FB4230* | 80 | 1.5 | Very strong seal |
| ABA, A= FK1820A+LD, B= FB4230* | 80 | 1.5 | Very strong seal |
| ABA, A= Queo 0201+LD, B= FB2310* | 80 | 1.5 | Very strong seal |
| * of the invention | | | |

(Layer blends contain always 10% of LDPE and 90 wt% of the second component)

Table 6

| Coex structure (25/50/25) | Welding time [ms] | Welding pressure [bar] | Max Force [N] | Elongation at max force [%] |
|---|---|---|---|---|
| AAB, A= FX1001*, B= Exceed + LD | 120 | 2.0 | 8.8 | 105 |
| ABA, A= Exceed + LD, B= FB4230* | 80 | 1.5 | 7.2 | 147 |
| ABA, A= FK1820A + LD, B= FB4230* | 80 | 1.5 | 9.3 | 287 |
| ABA, A= Queo 0201+ LD, B= FB2310* | 80 | 1.5 | 10.7 | 332 |
| * of the invention | | | | |

When layer A is not a terpolymer, but layer B is, the films normally show an increase in the seal force compared to monolayer film made of pure layer A. This shows how important the layer B is to support the sealing process/film structure.

**Claims**

1. A process for sealing a non-oriented polyethylene film to a substrate, preferably to a polyethylene film substrate, comprising bringing said polyethylene film and said substrate into contact and subjecting at least a part of the contact area to ultrasound so as to form a seal between said film and said substrate; wherein
said polyethylene film comprises a multimodal linear low density polyethylene copolymer comprising ethylene and at least one C3-20 alpha olefin comonomer and having a density of 905 to 940 kg/m$^3$.

2. A process as claimed in claim 1 wherein said polyethylene film comprises a multimodal linear low density polyethylene terpolymer comprising ethylene and at least two C3-20 alpha olefin comonomers.

3. A process as claimed in any preceding claim for sealing a monolayer polyethylene film to a substrate, preferably to a polyethylene film substrate, comprising bringing said monolayer polyethylene film and said substrate into contact and subjecting at least a part of the contact area to ultrasound so as to form a seal between said monolayer film and said substrate;
wherein said monolayer polyethylene film comprises a multimodal linear low density polyethylene copolymer comprising ethylene and at least one C3-20 alpha olefin comonomer and has a density of 905 to 940 kg/m$^3$.

4. A process as claimed in claim 1 or 2 for sealing a multilayer polyethylene film having at least adjacent layers A and B to a substrate, preferably to a polyethylene film substrate,
comprising bringing layer A of said polyethylene film and said substrate into contact and subjecting at least a part of the contact area to ultrasound so as to form a seal between said A layer of said film and said substrate;
wherein said multilayer polyethylene film comprises in said B layer a multimodal linear low density polyethylene copolymer comprising ethylene and at least one C3-20 alpha olefin comonomer and having a density of 905 to 940 kg/m$^3$.

5. A process as claimed in any of claims 1, 2 or 4 for sealing a multilayer polyethylene film having at least adjacent layers A and B to a substrate, preferably to a polyethylene film substrate, comprising bringing layer A of said polyethylene film and said substrate into contact and subjecting at least a part of the contact area to ultrasound so as to form a seal between said A layer of said film and said substrate;
wherein said multilayer polyethylene film comprises in said A layer a multimodal linear low density polyethylene copolymer comprising ethylene and at least one C3-20 alpha olefin comonomer and having a density of 905 to 940 kg/m$^3$.

6. A process as claimed in any preceding claim wherein said copolymer is a multimodal LLDPE produced using a Ziegler Natta catalyst.

7. A process as claimed in any preceding claim wherein said copolymer is a multimodal LLDPE terpolymer comprising ethylene and at least two C3-20 alpha olefin comonomers.

8. A process as claimed in claim 7 wherein the terpolymer comprises ethylene and at least two of 1-butene, 1-octene and 1-hexene.

9. A process as claimed in any preceding claim wherein the multimodal LLDPE copolymer has a density of 930 to 940 kg/m$^3$.

10. A process as claimed in any of claims 1, 2 or 4-9 wherein the film is a multilayer film and comprises one layer which is a blend of

    (i) a unimodal or multimodal LLDPE and
    (ii) LDPE or vLDPE;

and one layer comprising said multimodal LLDPE copolymer.

**11.** A process as claimed in any of claims 3 or 6-9 wherein said monolayer film consists of said multimodal LLDPE.

**12.** Use of ultrasound in the sealing of a non-oriented polyethylene film to a substrate wherein said film comprises a multimodal linear low density polyethylene terpolymer comprising ethylene and at least two C3-20 alpha olefin comonomers and having a density of 905 to 940 kg/m$^3$.

**13.** A process for the packaging of a product, in particular a heat sensitive product, comprising providing a container having an open end said container comprising a non-oriented polyethylene film;
filling said container with said product by dispensing said product through the open end of the container; and
sealing said container by ultrasonically welding the open end; wherein said film comprises a multimodal linear low density polyethylene terpolymer comprising ethylene and at least two C3-20 alpha olefin comonomers and having a density of 905 to 940 kg/m$^3$; or wherein said film is a monolayer or multilayer film as defined in any preceding claim.

**Patentansprüche**

**1.** Verfahren zum Aufsiegeln einer nicht-orientierten Polyethylenfolie auf ein Substrat, vorzugsweise auf ein Polyethylenfoliensubstrat, umfassend das In-Kontakt-Bringen von der Polyethylenfolie und dem Substrat und das Aussetzen von mindestens einem Teil des Kontaktbereichs zu Ultraschall, um auf diese Weise eine Versiegelung zwischen der Folie und dem Substrat zu bilden;
wobei die Polyethylenfolie ein multimodales lineares Polyethylencopolymer mit niedriger Dichte umfasst, das Ethylen und mindestens ein C3-20 alpha-Olefincomonomer umfasst und eine Dichte von 905 bis 940 kg/m$^3$ hat.

**2.** Verfahren nach Anspruch 1, wobei die Polyethylenfolie ein multimodales lineares Polyethylenterpolymer mit niedriger Dichte umfasst, das Ethylen und mindestens zwei C3-20 alpha-Olefincomonomere umfasst.

**3.** Verfahren nach einem der vorhergehenden Ansprüche zum Aufsiegeln von einer einschichtigen Polyethylenfolie auf ein Substrat, vorzugsweise auf ein Polyethylenfoliensubstrat, umfassend das In-Kontakt-Bringen von der einschichtigen Polyethylenfolie und dem Substrat und das Aussetzen von mindestens einem Teil des Kontaktbereichs zu Ultraschall, um auf diese Weise eine Versiegelung zwischen der einschichtigen Folie und dem Substrat zu bilden;
wobei die einschichtige Polyethylenfolie ein multimodales lineares Polyethylencopolymer mit niedriger Dichte umfasst, das Ethylen und mindestens ein C3-20 alpha-Olefincomonomer umfasst und eine Dichte von 905 bis 940 kg/m$^3$ hat.

**4.** Verfahren nach Anspruch 1 oder 2 zum Aufsiegeln einer mehrschichtigen Polyethylenfolie, die zumindest die angrenzenden Schichten A und B aufweist, auf ein Substrat, vorzugsweise auf ein Polyethylenfoliensubstrat, umfassend das In-Kontakt-Bringen von der Schicht A der Polyethylenfolie und dem Substrat und das Aussetzen von mindestens einem Teil des Kontaktbereichs zu Ultraschall, um auf diese Weise eine Versiegelung zwischen der A-Schicht der Folie und dem Substrat zu bilden;
wobei die mehrschichtige Polyethylenfolie in der B-Schicht ein multimodales lineares Polyethylencopolymer mit niedriger Dichte umfasst, das Ethylen und mindestens ein C3-20 alpha-Olefincomonomer umfasst und eine Dichte von 905 bis 940 kg/m$^3$ hat.

**5.** Verfahren nach einem der Ansprüche 1, 2 oder 4 zum Aufsiegeln einer mehrschichtigen Polyethylenfolie, die zumindest die angrenzenden Schichten A und B aufweist, auf ein Substrat, vorzugsweise auf ein Polyethylenfoliensubstrat, umfassend das In-Kontakt-Bringen von der Schicht A der Polyethylenfolie und dem Substrat und das Aussetzen von mindestens einem Teil des Kontaktbereichs zu Ultraschall, um auf diese Weise eine Versiegelung zwischen der A-Schicht der Folie und dem Substrat zu bilden;
wobei die mehrschichtige Polyethylenfolie in der A-Schicht ein multimodales lineares Polyethylencopolymer mit niedriger Dichte umfasst, das Ethylen und mindestens ein C3-20 alpha-Olefincomonomer umfasst und eine Dichte von 905 bis 940 kg/m$^3$ hat.

**6.** Verfahren nach einem der vorhergehenden Ansprüche, wobei das Copolymer ein multimodales LLDPE ist, das unter Verwendung eines Ziegler-Natta-Katalysators hergestellt wird.

**7.** Verfahren nach einem der vorhergehenden Ansprüche, wobei das Copolymer ein multimodales LLDPE-Terpolymer ist, das Ethylen und mindestens zwei C3-C20 alpha-Olefincomonomere umfasst.

**8.** Verfahren nach Anspruch 7, wobei das Terpolymer Ethylen und mindestens zwei aus 1-Buten, 1-Octen und 1-Hexen umfasst.

**9.** Verfahren nach einem der vorhergehenden Ansprüche, wobei das multimodale LLDPE-Copolymer eine Dichte von 930 bis 940 kg/m$^3$ hat.

**10.** Verfahren nach einem der Ansprüche 1, 2 oder 4-9, wobei die Folie eine mehrschichtige Folie ist und eine Schicht, die eine Mischung aus

(i) einem unimodalem oder multimodalem LLDPE und
(ii) LDPE oder vLDPE ist;

und eine Schicht umfasst, die das multimodale LLDPE-Copolymer umfasst.

**11.** Verfahren nach einem der Ansprüche 3 oder 6-9, wobei die einschichtige Folie aus dem multimodalen LLDPE besteht.

**12.** Verwendung von Ultraschall beim Aufsiegeln einer nicht-orientierten Polyethylenfolie auf ein Substrat, wobei die Folie ein multimodales lineares Polyethylenterpolymer mit niedriger Dichte umfasst, das Ethylen und mindestens zwei C3-20 alpha-Olefincomonomere umfasst und eine Dichte von 905 bis 940 kg/m$^3$ hat.

**13.** Verfahren zum Verpacken eines Produkts, insbesondere eines wärmeempfindlichen Produkts, umfassend das Bereitstellen eines Behälters, der einen offenes Ende aufweist, wobei der Behälter eine nicht-orientierte Polyethylenfolie umfasst;
Befüllen des Behälters mit dem Produkt, indem das Produkt durch das offene Ende des Behälters abgegeben wird; und
Versiegeln des Behälters durch Ultraschallverschweißen des offenen Endes; wobei die Folie ein multimodales lineares Polyethylenterpolymer mit niedriger Dichte umfasst, das Ethylen und mindestens zwei C3-20 alpha-Olefincomonomere umfasst und eine Dichte von 905 bis 940 kg/m$^3$ hat; oder wobei die Folie eine einschichtige oder mehrschichtige Folie nach einem der vorhergehenden Ansprüche ist.

**Revendications**

**1.** Procédé pour sceller un film de polyéthylène non-orienté sur un substrat, de préférence sur un substrat en film de polyéthylène, comprenant la mise en contact dudit film de polyéthylène et dudit substrat et soumettre au moins une partie de la zone de contact aux ultrasons de manière à former un joint entre ledit film et ledit substrat ; dans lequel ledit film de polyéthylène comprend un copolymère de polyéthylène basse densité multimode linéaire comprenant de l'éthylène et au moins un comonomère d'alpha-oléfine en C3-20 et présentant une densité de 905 à 940 kg/m$^3$.

**2.** Procédé selon la revendication 1, dans lequel ledit film de polyéthylène comprend un terpolymère de polyéthylène basse densité multimode linéaire comprenant de l'éthylène et au moins deux comonomères d'alpha-oléfine en C3-20.

**3.** Procédé selon l'une quelconque des revendications précédentes pour sceller un film de polyéthylène monocouche sur un substrat, de préférence sur un substrat en film de polyéthylène, comprenant la mise en contact dudit film de polyéthylène monocouche et dudit substrat et soumettre au moins une partie de la zone de contact aux ultrasons de manière à former un joint entre ledit film monocouche et ledit substrat ;
dans lequel ledit film de polyéthylène monocouche comprend un copolymère de polyéthylène basse densité linéaire multimode comprenant de l'éthylène et au moins un comonomère d'alpha-oléfine en C3-20 et présente une densité de 905 à 940 kg/m$^3$.

**4.** Procédé selon la revendication 1 ou 2 pour sceller un film de polyéthylène multicouche ayant au moins des couches adjacentes A et B sur un substrat, de préférence sur un substrat en film de polyéthylène,
comprenant la mise en contact de la couche A dudit film de polyéthylène et dudit substrat et soumettre au moins une partie de la zone de contact aux ultrasons de manière à former un joint entre ladite couche A dudit film et ledit substrat ;
dans lequel ledit film multicouche de polyéthylène comprend dans ladite couche B, un copolymère de polyéthylène basse densité multimode linéaire comprenant de l'éthylène et au moins un comonomère d'une alpha-oléfine en C3-20 et présentant une masse volumique de 905 à 940 kg/m$^3$.

**5.** Procédé selon l'une quelconque des revendications 1, 2 ou 4 pour sceller un film de polyéthylène multicouche ayant au moins des couches A et B adjacentes sur un substrat, de préférence sur un substrat en film de polyéthylène, comprenant la mise en contact de la couche A dudit polyéthylène film et dudit substrat et soumettre au moins une partie de la zone de contact aux ultrasons de manière à former un joint entre ladite couche A dudit film et ledit substrat ; dans lequel ledit film de polyéthylène multicouche comprend dans ladite couche A un copolymère de polyéthylène basse densité multimode linéaire comprenant de l'éthylène et au moins un comonomère d'une alpha-oléfine en C3-20 et présentant une densité de 905 à 940 kg/m$^3$.

**6.** Procédé selon l'une quelconque des revendications précédentes, dans lequel ledit copolymère est un PEBDL multimode fabriqué en utilisant un catalyseur de Ziegler Natta.

**7.** Procédé selon l'une quelconque des revendications précédentes, dans lequel ledit copolymère est un terpolymère PEBDL multimode comprenant de l'éthylène et au moins deux comonomères d'alpha-oléfine en C3-20.

**8.** Procédé selon la revendication 7, dans lequel le terpolymère comprend de l'éthylène et au moins deux composés parmi du butène-1, de l'octène-1 et de l'hexène-1.

**9.** Procédé selon l'une quelconque des revendications précédentes, dans lequel le copolymère PEBDL multimode possède une densité de 930 à 940 kg/m$^3$.

**10.** Procédé selon l'une quelconque des revendications 1, 2 ou 4-9, dans lequel le film est un film multicouche et comprend une couche qui est un mélange de

    (i) PEBDL multimode ou unimode et
    (ii) PEBDL ou un PE à très basse densité ;

et une couche comprenant ledit copolymère PEBDL multimode.

**11.** Procédé selon l'une quelconque des revendications 3 ou 6-9, dans lequel ledit film monocouche est constitué dudit PEBDL multimode.

**12.** Utilisation d'ultrasons dans le scellement d'un film de polyéthylene non orienté sur un substrat, dans lequel ledit film comprend un terpolymère de polyéthylène basse densité linéaire multimode comprenant de l'éthylène et au moins deux comonomères d'alpha-oléfine en C3-20 et présentant une densité de 905 à 940 kg/m$^3$.

**13.** Procédé d'emballage d'un produit, notamment un produit sensible à la chaleur, comprenant la fourniture d'un récipient ayant une extrémité ouverte, ledit récipient comprenant un film de polyéthylene non-orienté ; remplir ledit récipient avec ledit produit en délivrant ledit produit à travers l'extrémité ouverte du récipient ; et sceller ledit récipient par soudage par ultrasons de l'extrémité ouverte ; dans lequel ledit film comprend un terpolymère de polyéthylène basse densité linéaire multimode comprenant de l'éthylène et au moins deux alpha-oléfines en C3-20 et ayant une densité de 905 à 940 kg/m$^3$ ; ou dans lequel ledit film est un film multicouche ou monocouche selon l'une quelconque des revendications précédentes.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1837162 A
- EP 0332341 A
- US 20070215610 A
- JP 2009012779 B
- EP 517868 A